# EUROPÄISCHE PATENTSCHRIFT

(11) **EP 2 516 232 B1**
(45) Veröffentlichungstag und Bekanntmachung des Hinweises auf die Patenterteilung: **10.07.2013**
(21) Anmeldenummer: 10800719.6
(22) Anmeldetag: 15.12.2010
(51) Int. Cl.: B60T 15/02, F16K 1/16

(54) **VENTILEINRICHTUNG MIT MITTELS KARDANGELENK GEFÜHRTEM VENTILSCHLIEßGLIED**
VALVE DEVICE HAVING A VALVE CLOSING MEMBER GUIDED BY MEANS OF A CARDAN JOINT
DISPOSITIF SOUPAPE COMPORTANT UN OBTURATEUR DE SOUPAPE GUIDÉ AU MOYEN D'UN JOINT DE CARDAN

(30) Priorität: 23.12.2009 DE 102009060184
(43) Veröffentlichungstag der Anmeldung: 31.10.2012
(73) Patentinhaber: KNORR-BREMSE Systeme für Nutzfahrzeuge GmbH, 80809 München (DE)
(72) Erfinder: VOLLMER, Otto, 80689 München (DE); MANN, Daniel, 80993 München (DE)
(74) Vertreter: Mattusch, Gundula
(86) Internationale Anmeldenummer: PCT/EP2010/069836
(87) Internationale Veröffentlichungsnummer: WO 2011/076645

(56) Entgegenhaltungen:
- EP-A1- 2 068 056
- DE-A1- 19 605 562
- GB-A- 137 864
- GB-A- 2 094 428

## Beschreibung

### Stand der Technik

Die Erfindung geht aus von einer Ventileinrichtung einer druckmittelbetätigten Einrichtung eines Fahrzeugs mit wenigstens einem von einem Ventilglied in Bezug zu einem Ventilsitz zum Freigeben oder Verschließen eines Strömungsquerschnitts für das Druckmittel in Öffnungs- oder Schließstellung bringbaren Ventilschließglied, gemäß dem Oberbegriff von Anspruch 1.

In der DE 196 05 562 A1 wird eine Druckregeleinrichtung mit einem Relaisventil, die für Druckluftbremsanlagen von Nutzfahrzeugen vorgesehen ist, beschrieben.

Eine gattungsgemäße Ventileinrichtung zur Regelung des Bremsdrucks in pneumatischen Bremsanlagen von Fahrzeugen ist aus der EP 0 304 610 B1 bekannt und weist ein elektromagnetisches Steuerventil für ein Einlassventil sowie ein elektromagnetisches Steuerventil für ein Auslassventil auf, wobei die elektromagnetischen Steuerventile jeweils ein zylindrisches Ventilglied in Form eines Ankers aufweisen, welcher abhängig von der Bestromung eines Elektromagneten in Bezug zu sich zwei gegenüberliegenden Ventilsitzen bewegbar ist. Endseitig ist an dem Anker ein mit jeweils einem Ventilsitz zusammen wirkendes Ventilschließglied ausgebildet, welches einendseitig durch eine Elastomerfläche und anderendseitig durch eine ballige Fläche gebildet wird.

Die Kraft, welche durch die Elektromagneten aufgebracht werden muss, damit die Ventilschließglieder dicht gegen die zugeordneten Ventilsitze gedrängt werden, hängt stark davon ab, ob die Ventilschließglieder in Umfangsrichtung der Ventilsitze gesehen gleichmäßig an den Ventilsitzen anliegen können. Dies ist nicht immer gewährleistet, als es durch übliche Toleranzen zu geometrischen Abweichungen am Ventilschließglied und/oder an dem zugeordneten Ventilsitz kommen kann. Dann ist gegenüber idealen geometrischen Verhältnissen eine größere Betätigungskraft notwendig, um eine zuverlässige Abdichtung am Ventilsitz zu erzeugen. Die größere Kraft ist insbesondere notwendig, um bei aufgrund von Achsfehlern zunächst nur einseitiger Berührung zwischen dem Ventilschließglied und dem Ventilsitz einen dichtenden Kontakt über den ganzen Umfang herzustellen, wobei sich dabei das Ventilschließglied und/oder der Ventilsitz verformen.

Dies ist zum einen nachteilig als durch diese Verformungen ein unerwünschter Verschleiß an den Ventilschließkörpern bzw. an den Ventilsitzen entsteht. Zum andern bedingt eine größere Betätigungskraft der Ventilglieder zum Verschließen der Strömungsquerschnitte neben einem höheren Energieverbrauch auch eine weniger feinfühlige Steuerbarkeit bzw. Regelbarkeit der Ventileinrichtung, was sich durch eine größere Hysterese zeigt. Dieses Verhalten ist insbesondere im Hinblick auf sicherheitsrelevante Bremsanlagen von Fahrzeugen nachteilig, weil dann die Regeldynamik beispielsweise im Rahmen von ABS, ASR oder ESP verschlechtert wird. Bei größeren Toleranzen können in Schließstellung der Ventile dann sogar Leckagen auftreten.

Der vorliegenden Erfindung liegt demgegenüber die Aufgabe zugrunde, eine Ventileinrichtung der oben erwähnten Art derart weiter zu entwickeln, dass die oben beschriebenen Nachteile vermieden werden.

Diese Aufgabe wird erfindungsgemäß durch die Merkmale von Anspruch 1 gelöst.

### Offenbarung der Erfindung

Die Erfindung schlägt vor, dass das Ventilschließglied mit dem Ventilglied durch wenigstens ein Kardangelenk derart verbunden ist, dass das Ventilschließglied gegenüber dem Ventilglied räumlich verschwenkbar ist.

Ein solches echtes Kardangelenk weist bekanntermaßen eine dem Ventilglied zugeordnete eine Gabel sowie eine dem Ventilschließglied zugeordnete andere Gabel auf, wobei die eine Gabel relativ zur anderen Gabel in Bezug zu einer Mittelachse um 90 Grad versetzt angeordnet und mittels eines Kreuzbolzens drehbar verbunden ist.

Bedingt durch die räumliche Verschwenkbarkeit des mit dem Ventilsitz unmittelbar zusammen wirkenden Ventilschließglieds relativ zu dem Ventilglied, welches beispielsweise ein Kolben oder ein Anker des Ventils ist, können auch größere geometrische Fehler, insbesondere größere Achs- und Winkelfehler des Ventilschließglieds bzw. des Ventilglieds ausgeglichen werden.

Diese Maßnahme bedingt eine Reihe von Vorteilen gegenüber dem Stand der Technik. Einerseits führt sie zu einer Kosteneinsparung, weil die Ventilsitze, die Ventilglieder bzw. die Ventilschließglieder mit größeren Toleranzen ausgeführt werden können. Andererseits wird die Beanspruchung der Ventilsitze und der Ventilschließglieder durch Verformung reduziert, weil sich die Ventilschließglieder gegenüber den Ventilsitzen frei ausrichten können. Dies gilt insbesondere für elastische Ventilschließglieder aus Polymeren. Dadurch wird gleichzeitig die Dichtigkeit der Ventile verbessert, insbesondere bei tiefen Temperaturen. Weiterhin wird die Hysterese der Ventile reduziert.

Gegenüber Kugelgelenken, welche auch zur schwenkbaren Verbindung des Ventilschließglieds mit dem Ventilglied denkbar wären, haben Kardangelenke den Vorteil, das sie Abweichungen aufgrund eines geringeren Verstellmoments feinfühliger ausgleichen können, weil der Durchmesser eines Kreuzbolzens eines Kardangelenks geringer ist als der Durchmesser eines stets größeren Kugelgelenks. Weiterhin ist der Herstellungsaufwand geringer als beim Kugelgelenk, weil beispielsweise genormte Bolzen verwendet werden können und größere Toleranzen zugelassen werden können. Denn bei einem Kugelgelenk ist die Anpassung von Kugel und Kugelschale relativ aufwändig.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist der Ventilsitz und/oder das Ventilschließglied an seiner zum Ventilsitz weisenden Wirkfläche mit einer elastischen Dichtfläche versehen, um einerseits die Dichtwirkung zu erhöhen und um andererseits einen zusätzlichen Ausgleich kleinerer geometrischer Fehler zu ermöglichen.

Gemäß einer Weiterbildung ist das Ventilglied als pneumatisch betätigbarer Kolben eines pneumatischen Ventils ausgebildet. Alternativ könnte das Ventilglied durch einen Anker eines elektro-magnetischen Ventils gebildet werden, wobei das Ventilschließglied dann über das Kardangelenk dann mit dem Kolben bzw. mit dem Anker schwenkbar verbunden ist.

Besonders bevorzugt stellt die Ventileinrichtung ein pneumatisches, hydraulisches, elektro-pneumatisches oder elektro-hydraulisches Ventil einer Bremsanlage oder einer Luftfederung eines Fahrzeugs dar, an welchem die Erfindung ausgebildet ist.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur eine Querschnittsdarstellung eines Ventils einer Bremsanlage eines Fahrzeugs gemäß einer bevorzugten Ausführungsform der Erfindung.

### Beschreibung des Ausführungsbeispiels

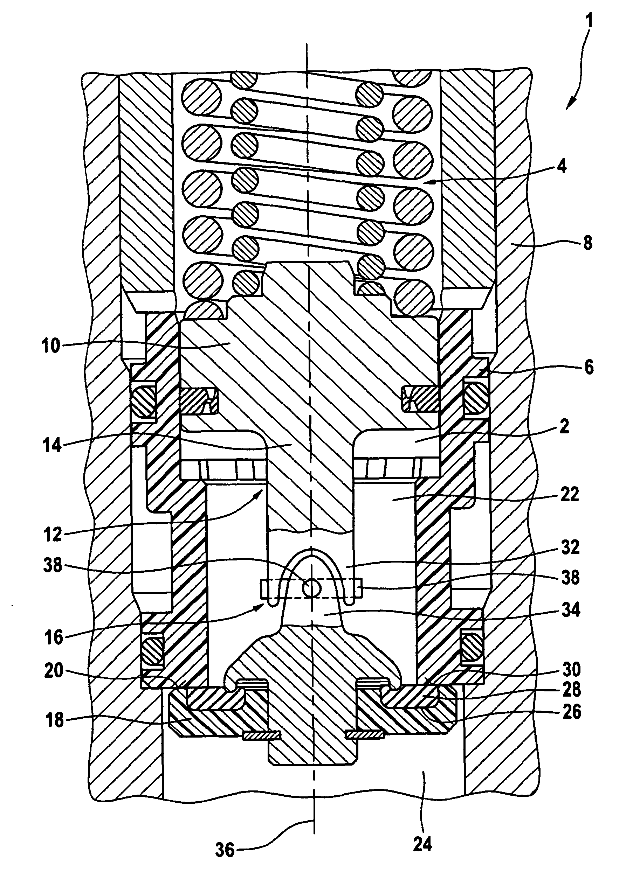

Das in Fig.1 im Querschnitt gezeigte Ventil 1 ist beispielsweise ein pneumatisches 2/2-Wegeventil einer pneumatischen Bremseinrichtung eines Nutzfahrzeugs.

Das Ventil weist einen durch die Druckkraft eines in einer Druckkammer 2 herrschenden Luftdrucks gegen die Wirkung einer Vorspannfedereinrichtung 4 betätigbaren, in einer Führungsbuchse 6 im Ventilgehäuse 8 linear geführten Kolben 10 als Ventilglied auf. Dieser Kolben 10 ist an seiner von der Vorspannfedereinrichtung 4 weg weisenden und durch einen Durchlass 12 in der Führungsbuchse 6 ragenden Kolbenstange 14 endseitig mittels eines Kardangelenks 16 mit einem Ventilschließglied 18 in allen Richtungen schwenkbar verbunden.

Das Ventilschließglied 18 ist beispielsweise plattenförmig und wirkt mit einem an der Führungsbuchse 6 endseitig ausgebildeten Ventilsitz 20 derart zusammen, dass bei an dem Ventilsitz 20 dicht anliegenden Ventilschließglied 18 im Rahmen einer Ventilsschließstellung eine Strömung zwischen einem Arbeitsraum 22 und einem Ventilausgang 24 unterbunden und im Rahmen einer Ventilöffnungsstellung bei vom Ventilsitz 20 abgehobenen Ventilschließglied 18 ein zwischen einem Minimum und einem Maximum beliebiger Strömungsquerschnitt zwischen dem Arbeitsraum 22 und dem Ventilausgang 24 freigegeben wird.

Besonders bevorzugt weist das Ventilschließglied 18 an seiner zum Ventilsitz 20 weisenden Fläche eine Ringausnehmung 26 auf, in welcher ein elastischer Ring 28 beispielsweise aus einem Elastomer gehalten ist, welcher dann mit einer komplementären Dichtfläche 30 am Ventilsitz 20 zusammen wirkt.

Durch Beaufschlagung der Druckkammer 2 mit Druck bzw. durch Druckentlastung der Druckkammer 2 lassen sich die Ventilschließstellung bzw. die Ventilöffnungsstellung herstellen.

Das Kardangelenk 16 weist eine der Kolbenstange 14 zugeordnete eine Gabel 32 sowie eine dem Ventilschließglied 18 zugeordnete andere Gabel 34 auf, wobei die eine Gabel 32 relativ zur anderen Gabel 34 in Bezug zu einer Mittelachse 36 bevorzugt um 90 Grad versetzt angeordnet und mittels eines Kreuzbolzens 38 drehbar verbunden ist. Denkbar sind aber auch andere Varianten von Kardangelenken 16.

Bedingt durch das Kardangelenk 16 ist das Ventilschließglied 18 gegenüber dem Kolben 10 allseitig, d.h. räumlich in allen Richtungen verschwenkbar, wodurch geometrische Fehler zwischen Ventilschließglied 18 und/oder Ventilsitz 20 und/oder Ventilglied (Kolben) 10 ausgeglichen werden können.

Die Erfindung ist nicht auf das oben beschriebene Ventil beschränkt, sondern für jegliche Art von Ventil geeignet, bei welchem ein Ventilschließglied mit einem Ventilsitz unter bestimmten geometrischen Gegebenheiten zusammen wirkt.

**Bezugszeichenliste**

| | |
|---|---|
| 1 | Ventil |
| 2 | Druckkammer |
| 4 | Vorspannfedereinrichtung |
| 6 | Führungsbuchse |
| 8 | Ventilgehäuse |
| 10 | Kolben |
| 12 | Durchlass |
| 14 | Kolbenstange |
| 16 | Kardangelenk |
| 18 | Ventilschließglied |
| 20 | Ventilsitz |
| 22 | Arbeitsraum |
| 24 | Ventilausgang |
| 26 | Ringausnehmung |
| 28 | Ring |
| 30 | Dichtfläche |
| 32 | Gabel |
| 34 | Gabel |
| 36 | Mittelachse |
| 38 | Kreuzbolzen |

## Patentansprüche

1. Ventileinrichtung (1) einer druckmittelbetätigten Einrichtung eines Fahrzeugs mit wenigstens einem von einem Ventilglied (10) in Bezug zu einem Ventilsitz (20) zum Freigeben oder Verschließen eines Strömungsquerschnitts für das Druckmittel in Öffnungs- oder Schließstellung bringbaren Ventilschließglied (18), **dadurch gekennzeichnet, dass** das Ventilschließglied (18) mit dem Ventilglied (10) durch wenigstens ein Kardangelenk (16) derart verbunden ist, dass das Ventilschließglied (18) gegenüber dem Ventilglied (10) räumlich verschwenkbar ist.

2. Ventileinrichtung nach Anspruch 1, **dadurch gekennzeichnet, dass** das Kardangelenk (16) eine dem Ventilglied (10) zugeordnete eine Gabel (32) sowie eine dem Ventilschließglied (18) zugeordnete andere Gabel (34) aufweist, wobei die eine Gabel (32) relativ zur anderen Gabel (34) in Bezug zu einer Mittelachse (36) um 90 Grad versetzt angeordnet und mittels eines Kreuzbolzens (38) drehbar verbunden ist.

3. Ventileinrichtung nach Anspruch 1 oder 2, **dadurch gekennzeichnet, dass** der Ventilsitz (20) und/oder das Ventilschließglied (18) an seiner zum Ventilsitz (20) weisenden Wirkfläche mit einer elastischen Dichtfläche (28) versehen ist.

4. Ventileinrichtung nach einem der vorhergehenden Ansprüche, **dadurch gekennzeichnet, dass** das Ventilglied (10) einen pneumatisch betätigbaren Kolben eines pneumatischen Ventils beinhaltet.

5. Ventileinrichtung nach einem der vorhergehenden Ansprüche, **dadurch gekennzeichnet, dass** die ventileinrichtung ein pneumatisches, hydraulisches, elektro-pneumatisches oder elektro-hydraulisches Ventil einer Bremsanlage oder einer Luftfederungseinrichtung eines Fahrzeugs darstellt.

## Claims

1. Valve device (1) of a pressure fluid-actuated device of a vehicle, comprising at least one valve closing member (18), which can be brought by a valve member (10) into an open or a closed position with respect to a valve seat (20) in order to release or close a flow cross-section for the pressure fluid, **characterised in that** the valve closing member (18) is connected to the valve member (10) by means of at least one universal joint (16) in such a way that the valve closing member (18) can be pivoted in three dimensions relative to the valve member (10).

2. Valve member according to claim 1, **characterised in that** the universal joint (16) has one fork (32) assigned to the valve member (10) and another fork (34) assigned to the valve closing member (18), wherein one fork (32) is arranged offset by 90 degrees relative to the other fork (34), in relation to a centre line (36), and connected rotatably by means of a cross-pin (38).

3. Valve device according to claim 1 or 2, **characterised in that** the valve seat (20) and/or the valve closing member (18) is/are provided with a flexible sealing surface (28) on the operative surface thereof facing the valve seat (20).

4. Valve device according to any of the preceding claims, **characterised in that** the valve member (10) contains a pneumatically actuated piston of a pneumatic valve.

5. Valve device according to any of the preceding claims, **characterised in that** the valve device represents a pneumatic, hydraulic, electropneumatic or electrohydraulic valve of a brake system or of a pneumatic suspension device of a vehicle.

## Revendications

1. Dispositif (1) de soupape d'un dispositif à actionnement par un fluide sous pression d'un véhicule, comprenant au moins un obturateur (18), pouvant être mis, par un organe (10) de soupape, dans une position d'ouverture ou de fermeture par rapport à un siège (20) de soupape pour dégager ou pour fermer une section transversale d'écoulement du fluide sous pression, **caractérisé en ce que** l'obturateur (18) de soupape est relié à l'organe (10) de soupape par au moins un joint (18) à la Cardan de manière à ce que l'obturateur (18) puisse pivoter dans l'espace par rapport à l'organe (10) de soupape.

2. Dispositif de soupape suivant la revendication 1, **caractérisé en ce que** le joint (16) à la Cardan a une fourche (32) associée à l'organe (10) de soupape, ainsi qu'une fourche (34) associée à l'obturateur (18) de soupape, la fourche (32) étant montée relativement à l'autre fourche (34) décalée de 90 degrés par rapport à un axe (36) médian et étant assemblée tournante au moyen d'un axe (38) en croix.

3. Dispositif de soupape suivant l'une des revendications 1 ou 2,
**caractérisé en ce que** le siège (20) de soupape et/ou l'obturateur (18) de soupape est pourvu d'une surface (28) élastique d'étanchéité sur sa surface efficace tournée vers le siège (20) de soupape.

4. Dispositif de soupape suivant l'une des revendications précédentes,
**caractérisé en ce que** l'organe (10) de vanne comporte un piston à actionnement pneumatique d'une soupape pneumatique.

5. Dispositif de soupape suivant l'une des revendications précédentes,
**caractérisé en ce que** le dispositif de soupape représente une soupape pneumatique hydraulique, électropneumatique ou électrohydraulique d'une installation de frein ou d'un dispositif de suspension pneumatique d'un véhicule.
